# EUROPEAN PATENT APPLICATION

(11) **EP 0 996 058 A1**
(43) Date of publication of application: **26.04.2000**
(21) Application number: 98119826.0
(22) Date of filing: 19.10.1998
(51) Int. Cl.: G06F 9/44

(54) **Improved presentation scheme for communication between user stations and application programs**

(71) Applicant: International Business Machines Corporation, Armonk, NY 10504 (US)
(72) Inventor: Gamma, Erich, 8604 Volketswil (CH); Madhavan, Sanjay, 8052 Zürich (CH); Weinand, Andre, 8006 Zürich (CH)
(74) Representative: Heusch, Christian

(57) **Abstract**

Systems and method for interactive cooperation of a user station and a commonly used application program residing in a central location, such as a server. The interactive cooperation take place across a link or network. According to the present scheme, a structure of a presentation element for transferring and holding dialog data and a managing mechanism for implementing and controlling the presentation element is established in the user station. A corresponding structure of a counterpart element for transferring and holding the dialog data is established with the application program, and two corresponding sets of data for the dialog element in an associated presentation element and in the corresponding counterpart element, respectively, are kept for the interactive exchange of the dialog data. This is done in a way that the user station and the application program each can cooperate with the presentation element and counterpart element, respectively, independent of transmissions over the link or network.

## Description

### Field of Invention

The invention is related to systems in which data can be interactively entered and displayed with a graphical user interface running on user stations, in cooperation with commonly used application programs residing in a central location, e.g. in a server.

### Background

Presently used systems for the interactive cooperation between an application program in a common server, and remote user stations may allow versatile interactive sessions. However, many of them require "heavy" user stations which need much processing capability particularly adapted to the application to be used; this results in costly user stations, and in particular requires an immense effort for updating a great number of user stations if the application program is modified or improved. Other systems presently in use have simple user stations but require many transmissions between a user station and a central server hosting the application which has to be involved in every interactive input and output operation. Furthermore, the performance of present systems is very dependent on the link quality; high bandwidth and low latency are required.

### Objects of the Invention

It is an object of the invention to devise a system and method for the interactive cooperation between user stations and an application program in a central location, which do not require application-specific programs in the user stations but which allow to handle some of the tasks of the presentation logic (preparation and transfer of input/output data) in the user stations. It is a further object of the invention to reduce the amount of data and messages which have to be transferred between application programs and user stations in such a system, and to enable optimal utilization of links for data transfers during interactive sessions.
It is a further object to avoid in such systems undue delays which might be caused by the transfer of larger amounts of data, and by limited link (network) capabilities.

### Summary of the Invention

These objects are achieved by an inventive scheme for interactive cooperation between an application program in a server and a user station over a link or network. According to the present scheme there is a presentation layer being provided between the application program and the user station. This presentation layer is partially implemented in the user station and partially in the server. It comprises a pair of presentation elements representing a dialog element displayed on the user station. One presentation element of said pair is provided in the user station, and the corresponding interface element of the pair is provided with the server. Furthermore, a program is provided which executes in the user station and which controls the presented dialog elements.

The interactive cooperation of an application program and a remote user station over a link or network is improved by the present scheme. According to this scheme, a structure of a presentation element for transferring and holding the dialog data and a managing mechanism for implementing and controlling said presentation element is established in the user station. A corresponding structure of a counterpart element for transferring and holding the dialog data is established with the application program. This is done in a way that the user station and the application program each can cooperate with the presentation element and counterpart element, respectively, independent of transmissions over the link or network.

### Advantages of the Invention

The invention allows that a portion of the presentation logic for data transfers in interactive sessions is implemented in user stations, but nevertheless to have user stations which are universally suitable for various applications. The user station need not to be modified when new or changed applications are employed. It is just necessary to define some interface element structure (widget structure) at the beginning of an interactive session. Due to the intermediate holding of the same interactive data and messages on both sides of the link, the transmission can be effected independently and is transparent to user station and application. Because of the independent transmissions and the possibility to transfer only actually needed (visible) data while preparing further required data in the corresponding logic interface element on either side, the interactive cooperation is to a high degree independent of the link and network conditions.

### Description of the drawings

Embodiments of the invention will be described in the following, with reference to the drawings, listed below:
- **Fig.1**: is a block diagram of a system using the invention;
- **Fig.2**: illustrates the paired/split nature of presentation and counterpart elements (widgets/proxies) in a system of Fig. 1;
- **Fig.3**: is a diagram of the structure of the presentation elements (widgets) used for a particular application (Dossier);
- **Fig.4**: shows a particular embodiment of the invention in which each of the presentation and counterpart elements have an associated model of the respective data structure for intermediate storage and direct transfers between the models;
- **Fig.5**: shows the organization of the communication between presentation and counterpart elements, using symmetrical input/output and buffering mechanisms on both sides of a link;
- **Fig.6A and 6B**: show how user interface engines in user stations can cooperate with an application controller in a common (central) application server, to initiate interactive sessions;
- **Fig.7**: illustrates details for the interactive transfer of table data in a system using the invention;
- **Fig.8**: illustrates a pie chart for which the implementation of a widget is explained.

### Detailed Description

### Definition of Terms

A user station is a system that allows the preparation and transfer of input and/or output data. I.e. a user station is any system on which the user can interactively enter and/or receive information. Examples are, workstations, terminals, network computers, personal computers, desktop machines, portable systems, handheld computing devices etc. A user station is herein referred to as remote user station if there is a link or network that connects the user station to another systems called central location or server. The word remote is not used to indicate that the user station is spaced apart from the central location or server. The remote user station might be located right next to it.

An application program is some code that processes data. It can be a part or module of a software package, or it can be the whole package. Typical examples of application programs are programs used in an office environment for text and image processing, spread sheets, meeting calendars, or specific applications for insurances, banks, manufacturing facilities, hotels, call centers etc. Another example is a network management software used to configure and/or monitor communication networks. The present invention allows to build interactive systems.

A central location is a server (also referred to as application server) or any other facility capable of hosting an application. Usually, the application is hosted in the form of software. Examples of servers are, workstations, personal computers, desktop machines, portable systems, server machines, mainframe computer, etc.

A link or network is any connection between the user station and the central location that allows the exchange of data and/or information. It can be wire-based or wireless, or a combination of both.

All other words and expressions are either explained when being introduced, are obvious for somebody skilled in the art when viewed in the context of the present specification.

### 1) Environment

The environment of the invention is a system in which at least one user station is connected to a data processing facility containing an application program. In a multi-user environment there are multiple user stations connected to a common data processing facility containing the application program. A user can interactively enter and receive information on his station when he is running an application, e.g. daily updating of customer accounts.

There are various possibilities to distribute the processing and storing of data between user stations and a common facility. One extreme is to provide a mere terminal for the user which only displays data and accepts inputs, whereas all processing is done by the application in the central computer. This requires many transmissions over the network, and may cause undesirable delays. Another negative consequence is that the quality of the user interface is low if there is no local intelligence in the terminal. The other extreme is to provide powerful user stations in which an application program can do all processing, and only the results of an interactive session are stored in a central data base. In this case, changes or improvements in the applications to be used require an updating of the programs and structure of all user stations which prohibits frequent improvements and updates.

The invention provides a system where the processing and storage for interactive cooperation between user stations and a common facility (e.g. a server), i.e. the presentation logic, is distributed in a manner that user stations can be used universally for various and changing applications, and the transmissions over the network are reduced to a minimum.

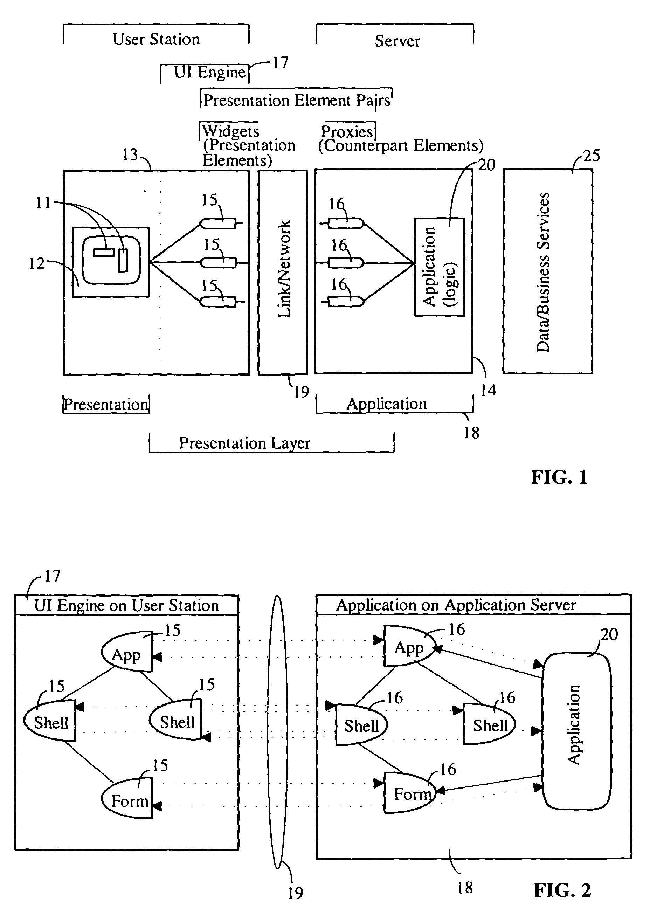

Fig. 1 is a general block diagram of a system including the invention. The basic concept and details of the invention will be described in the sequel.

### 2) Basic Proposal of the Invention

For the interaction between the user and the system, various (physical) dialog elements 11 are used which are in particular fields on the display 12: boxes for entering data, buttons for clicking, menu bars with command items, tables, etc. The dialog elements 11 are used for visual output of data and messages to the user, and for entering data and messages by the user.

The invention provides for each of the dialog elements 11 (or for each combined group of such elements) a separate logical path between user station 13 and application 18. For each dialog element 11, the respective logical path includes, on the user station side, a logical representation 15 of the dialog element termed "presentation element" or short "widget" in the following, and on the application (common server) side a counterpart 16 of the logical representation, which is termed "counterpart element" or "proxy" in the following. The structure is depicted in Fig. 1.

Thus, the presentation logic is separated between user station 13 and server 14. The user station 13 only interacts with the presentation elements 15 (widgets) provided in it (as if it were directly interacting with the application 18), the application program in the server 14 interacts with the counterpart elements 16 (proxies). The separation is transparent for user and application program, i.e. they operate as if they were directly communicating with the dialog elements 11. The actual transmission of data and messages is done between widgets 15 and proxies 16, without participation of the user or the application program. Thus, in other words, the logical (presentation) path between the dialog element 11 on the display 12 of the user station 13 and the application program on the server 14 is separated into sections, with the widgets 15 and proxies 16 constituting the intermediate "buffers".

The invention supports the deployment of applications 18 with very light weight user stations 13. It thereby enables centralization of system maintenance and administration, decreasing the cost of user station management.

The principal idea is to run applications 18 on a centrally controlled application server 14. Only the presentation part of an application 18 is run on the user's station 13. The presentation part is implemented by a compact program suited for universal use, which in particular implements (and manages) the presentation elements 15 or widgets.

Thus, an important component of the solution is this interface program implemented on the user station 13, termed in the following "User Interface Engine" (UI Engine) 17. The UI Engine 17 realizes the user interface of an application 18 on the remote user station 13; it interacts with the end user.

The UI Engine 17 only executes presentation logic and no application logic (except for some elementary tasks such as data format validation). The actual communication between UI Engine 17 and application 18 is effected between the presentation elements 15 (widgets) and the associated counterpart elements 16 (proxies). The application 18 initially instructs the UI Engine 17 about the selection and structure of the widgets 15 which should represent the user interface. The UI Engine 17 activates these widgets 15 in the required structure, and notifies the application 18 when the user interacts with the dialog elements 11 represented by the widgets 15, and when data are required from the application 18.

So, all that runs on the user station 13 is the UI Engine 17 which can be used universally from various applications 18. Since no application specific code is executed on the user station 13 there is no need for application specific administration of the respective user station 13.

An application 18 communicates with the UI Engine 17 through a high level user interface protocol. This protocol is designed to scale down to low bandwidth slow communication links 19. The application developer may be shielded from this protocol with a special tool kit that takes care of the distribution. In other words, application developers do not have to be aware that they are developing a distributed application. All distribution is handled behind the scenes.

The UI Engine 17 can be run either as an applet inside an available Web browser or as an external helper application.

In contrast to classical Web applications based on the Hyper Text Markup Language (HTML), developers of applications 18 for a system employing present invention do not have to deal with dynamic HTML page generation and server extension mechanisms like *CGI*. Applications 18 an be developed with conventional programming languages like Java and Smalltalk. Heterogeneous technologies (HTML, Plugins, Java, and JavaScript) are neither required on the user station 13 nor on the server 14. This improves both robustness as well as ease of development. In addition, user interfaces are not constrained by HTML.

### 3) Details about Widgets and Structure

Building applications 18 for interactive sessions requires a special set of objects (counterpart elements) 16. They have an application programming interface and functional behavior which is not different from "normal" widgets sets but they completely lack a user interface. Each of these counterpart elements 16 can talk to a corresponding "real" widget 15 in the UI Engine 17 by a communication mechanism and acts as a proxy to the real widget 15. Thus every widget construct is split into two half objects: an application programming interface "counterpart element" 16 (proxy) and a real user interface "presentation element" 15 (widget) (see Fig.1 and Fig.2).

Applications 18 communicate with the UI Engine 17 via a protocol which consists of *requests*, *events*, and *callbacks*. The application 18 sends *requests* via the link or network 19 to the UI Engine 17. User interaction typically results in some low level *events* (e.g. a "mouse click") which are handled by the UI Engine 17 first and then convened into a semantic *event* ("execute action") which is passed back via the link or network 19 to the application 18. These events are typically used to synchronize the other half (proxy) of the widget construct and then to trigger some application specific action. If the UI Engine 17 needs some data from the application's counterpart element 16 (proxy) it triggers a *callback*.

### Structure

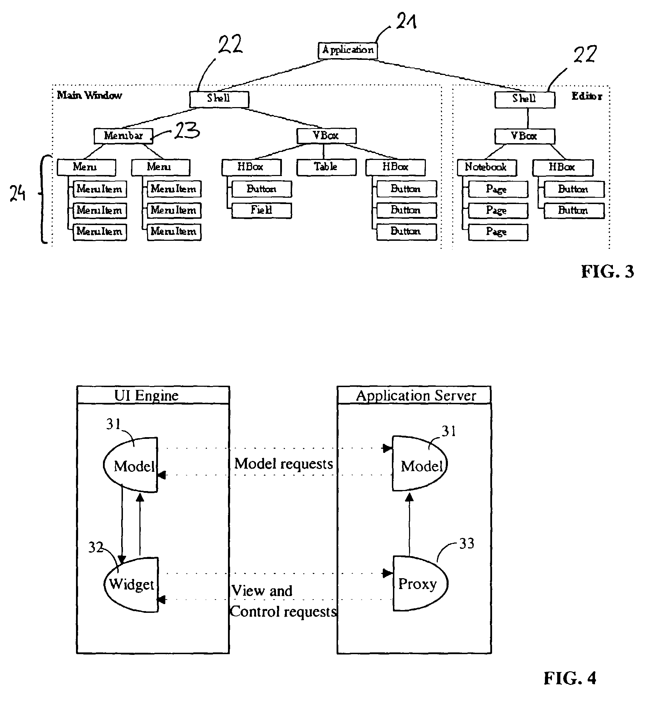

The widgets 15 (and proxies 16) form a hierarchy (see Fig.3): At the root is an Application widget 21 which provides methods for manipulating the global state of the application 18 (terminating etc.) and maintaining a list of windows or "Shells" 22. A Shell 22 represents a top-level window with an optional menubar 23 (a tree 23 of menus with menu items) and a content area. The content area is a tree of composite widgets. Composite widgets form the inner nodes of the tree and implement the layout. Simple widgets are the leaves of the tree. Figure 3 shows a part of the tree from a sample application called "Dossier". A more detailed description of the widget categories is given below.

Maintaining state across the half object split (widget/proxy) is delicate. One does not want to render the application 18 unusable just because there was a communication problem or the user station 13 crashed. Therefore the UI Engine 17 is "conceptually stateless", that is all state is kept in the application 18. Of course, some state is held in the UI Engine 17 too (e.g. the widget hierarchy) but only as a type of cache. It is always possible to clear that cache (for instance by resetting the UI Engine 17) and re-transmitting all information from the application 18 to the UI Engine 17.

This functionality has a major impact on the communication philosophy between half objects (proxies/widgets). Usually, a proxy 16 on the application side is modified (change of state), and then an attempt is made to make the corresponding change in the associated widget 15 in the UI Engine 17 ("synchronize" the widget 15). If there is no associated UI Engine widget 15 (e.g. because the communication timed out or the UI Engine 17 is down), the "synchronize" step will be a no-op but the proxy 16 will be in a consistent state. If the UI Engine 17 comes back later the application 18 reconnects to it and "synchronizes" to the current state.

The system according to the present invention is designed to scale down to low bandwidth connections 19. Therefore network latency and network bandwidth influences some design decisions. Communication between both half objects (proxy/widget) has to be minimized and requests should always be batched together as a single message to avoid a sluggish user interface. The invention allows to minimize communication overhead by only transmitting presentation data which is visible (e.g. just the visible 10 rows in a table with 10000 rows) or where chances are high that it will become visible soon (e.g. the next 10 rows in that table).

To address high latency environments the system has to batch single requests. But batching is only possible if requests are mostly asynchronous, that is, if they do not require an immediate answer and do not block the sender. As a consequence, communication between the application 18 and the UI Engine 17 is mostly asynchronous. For example if the UI Engine 17 has to draw a table it sends a request back to the application 18 to request the data for the visible pan of the table. The UI Engine 17 does not expect to get the requested data immediately and draws a place holder instead. Because it does not wait for the data to arrive the UI Engine 17 does not block and remains responsive. Depending on the network latency and application responsiveness the requested data will asynchronously arrive sometime later and will replace the place holder data.

### Widget Category Overview

There are the following five categories:

### 1. Resources

are all objects which are not user interface elements themselves but are used to configure these elements and therefore should live in the UI Engine 17 as well as the application 18. Examples are *fonts*, *bitmaps*, *images*, and *cursors*.

### 2. Widgets

are all kinds of user interface elements ranging from simple ones like *buttons*, *labels*, *editable fields*, *menus* and *menu items* to more complex ones like one-dimensional *scrolling lists* and two dimensional *tables* or tree displays.

### 3. Layout

Widgets in this category are composite widgets implementing a specific layout policy for their children.

### 4. Shells

Shells 22 are the top level widgets forming the root of every widget tree. A shell 22 is typically represented as a modal or non-modal window and optionally has a menu bar 23. The shell 22 controls the collaboration of these elements. Examples for shells 22 are the "standard" *Shell*, *Dialogues*, *Alerts* and the root shell ("*Application*") which manages the overall application.

### 5. Models

This category contains classes which can be used as a data source for some of the widgets from the Widget category above. Models are identical to the models of the known MVC (model view controller) paradigm and widgets represent the view and controller components.

### Model-based Widgets

Most widgets (from the category 2) support two different application programming interfaces. The first interface assumes that every widget has a built-in model and provides an interface for accessing and changing the model. For example a Field has a text model and methods setText and getText. In addition the widget provides methods for specifying the visual appearance of the user interface element, e.g. what font to use or how many characters to display.

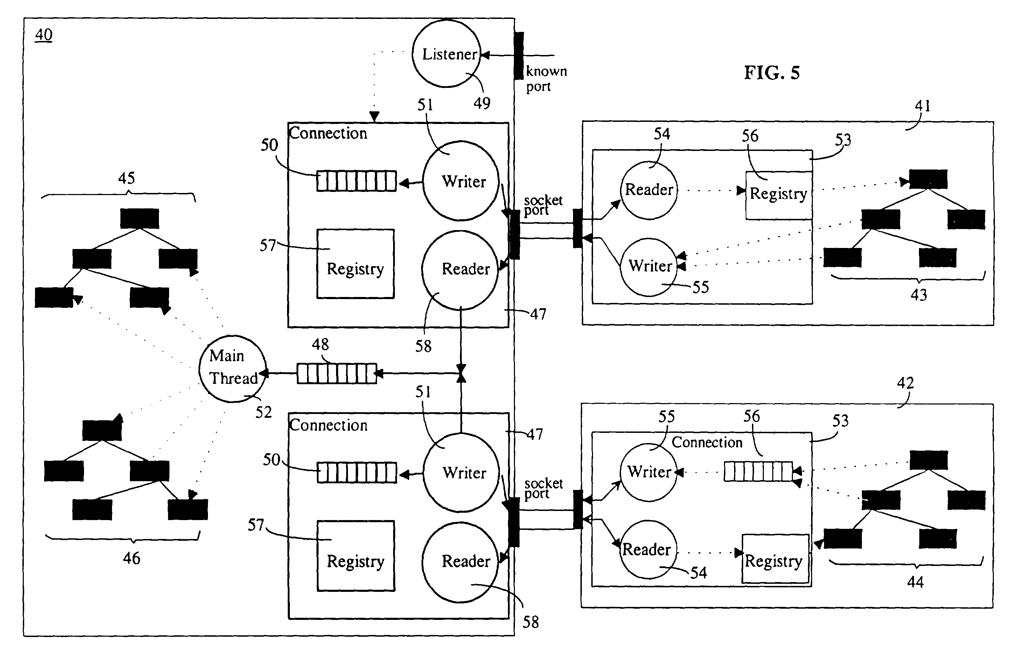

The second application programming interface uses an external model 31 which is a separate object (see Figure 4). Note that if different widgets 32 receive data from the same application data structure (multiple views of the same data object) they can all share the same model 31.

Under this paradigm the application 18 typically creates and configures both the model 31 and the widget/proxy 32/33 and then mostly does not use the widget/proxy 32/33. Whenever the application 18 has to update data presented in the UI Engine 17 it talks to the model 31. When the application 18 wants to retrieve changed data it asks the model 31 for it, not the widget/proxy 32/33.

An example for this application programming interface is the Table widget/proxy and the TableModel (in fact the Table widget/proxy does not have a built-in model and only supports the model-based application programming interface). The TableModel implements a two dimensional data structure with rows and columns. The UI Engine half of the model contains a cache so that data access requests of the Table widget can be fulfilled immediately. If the cache does not contain valid data the TableModel returns place holders and asynchronously requests new data from the application half model. When this data arrives the dependent widgets are notified and updated.

The update policy used between the two halves of the TableModel is configurable. One synchronization policy optimizes communication for low bandwidth, low latency connections by reducing the amount of data transmitted. Another policy for high bandwidth, high latency reduces the number of requests going back and forth but does not minimize the size of the data transmitted.

The FormModel is another example for a model based application programming interface. A FormModel represents a set of named and typed attributes, similar to a heterogeneous dictionary. Most widgets/proxies from category 2 can be initialized with a FormModel and an attribute name. Fields can be used on string attributes, CheckBoxes on Boolean attributes and groups of RadioButtons on enumeration type attributes. These widgets/proxies will ignore their built-in model but will track changes and allow updates of the named attributes of the specified FormModel.

Similar to the TableModel different synchronization policies can accommodate different network characteristics. One policy updates the application half of the FormModel on every attribute change. Another policy collects all changes and sends them via the link or network 19 back to the application 18 in a single call back only on explicit request.

### 4) Communication Aspects

For a robust and adequately fast transmission between proxies 16 and widgets 15, a system employing the invention also might have the following features:
- The communication between proxy 16 and widget 15 is adaptable to the characteristics of the network 19 (or link) used (bandwidth, latency).
- Implementation of the widgets 15 is stateless as far as practicable, so that the complete user interface of an application 18 can be reconstructed at any time from the state of the proxies 16 (after a network interruption or a reset of the user station / UI Engine 13/17).

In case of ideal network conditions, i.e. high bandwidth and low latency, all requests and data can be immediately transmitted from a proxy 16 to the associated widget 15. However, in case of small network bandwidth, the limited capacity must be used optimally, i.e. transmissions have to be reduced to a minimum. For reducing the amount of transmitted data, only such information is transmitted which is actually visible. If e.g. an application 18 has a table in which thousands of data sets have to be presented, these are initially not all transmitted to the UI Engine 17. The UI Engine 17 requests only the transmission of data sets for visible lines. Furthermore, static information such as icons, images, alerts are transmitted only once to the UI Engine 17 and used there as often as required.

The above measures are suitable for networks 19 with low latency. If the latency is high (slow transmission) other measures are taken. Proxy 16 and widget 15 are decoupled as far as possible, by avoiding synchronous requests and by increasing the local intelligence of widgets 15. In the case of a table presentation (already mentioned above) all requests between proxy 16 and widget 15 are asynchronous. This means that if a widget requests N data sets, it is not blocked until all N data sets are received. Rather, after sending the request, the widget 15 fills the local table structure with temporary representative (place holder) objects. The required data are received after some delay, depending on the network behavior, and then replace the place holder objects. The avoidance of absolutely synchronous communication also allows to combine many small requests into a single transmission, without the effect that a pending request blocks further processing before a respective response is received.

### Further measures for reducing communication requirements:

In order to reduce the number of round trips between the UI Engine 17 and the application 18, a system using the invention might provide built-in mechanisms for the following commonly used functionalities:

### 1) Enabling and Disabling

Special conditions on some widgets 15 can be used to enable/disable other widgets without any communication between the UI Engine 17 and application 18. Examples are empty/non-empty Fields, empty/non-empty selections in List and Table widgets.

### 2) Validation

Predefined Validator and Formatter objects can be attached to some widgets 15 in order to perform validations like range checking and syntax checking without any communication between the UI Engine 17 and the application 18. This is especially useful in FormModel based widgets, where changes are not transmitted immediately but batched.

For all widgets 15, which handle textual user inputs and issue data received from the application program 20, i.e. which must be textually displayed, there exists an abstraction *DataType* which combines formatting and validation typical for the data type. Since this object can be used for any number of widgets 15, it has to be transmitted only once to the UI Engine 17. Thereafter, this object can be used to validate user inputs without further communication and it can ask for repeated input or correction and can format the item for output.

### 5) Further Details and Possibilities

### a) Data-dependent Forms (Pagebook)

In particular situations, there must be shown different widgets 15 (dialog elements 11) to the user depending on the value of related data. E.g., for the input of account data there must be shown additional input fields depending on the type of account. This means that the user interface must be dynamically changed. In a system using the invention, such "dynamic forms" can be implemented using a Pagebook. A Pagebook consists of a collection of pages, and in dependence of the value of actually needed (displayed) data, the UI Engine 17 can decide locally which page has to be shown. Thus, no additional transmissions between user station 13 and application 18 are required in such a case.

### b) Multiple Sessions:

In a system employing the invention, there exists also the possibility to have multiple sessions between user stations and applications.
1) A single user station can work simultaneously with two or more different applications 41, 42. In this case, there exists a separate, different widget structure for each of the sessions in the UI Engine 40. Each of the applications 41, 42, on the other hand, maintains one proxy tree 43, 44, corresponding to one of the widget trees 45, 46 in the user station's UI Engine 40 (see Fig.5).
2) Many user stations may simultaneously each have a session with a single application. The application then entertains one proxy structure, and each of the UI Engines in the user stations has one corresponding widget structure.

### 6) Details for Transmission (Connection Objects)

For the efficient transmission of data between widget trees in user stations and proxy trees held by applications, special connection mechanisms (Connection Objects 47) are provided on both sides. An example for a multiple session case between one user station and two applications 41, 42, using these special connection mechanisms 47, is shown in Fig.5.

In this case, the UI Engine 40 is implemented as a multi-threaded arrangement. A listener thread 49 accepts connections from the applications 41, 42 and creates a Connection Object 47 for each client. A thread in a Connection Object 47 receives requests from the respective application 41, 42 and posts them into the event queue 48 of the user interface tool kit. Events and callbacks going back from the UI 40 to the application 41, 42 are put into a write queue 50 of the associated Connection Object 47 and processed inside a separate writer 51 thread (left hand side of Fig.5).

The main thread 52 reads and processes events from the event queue 48. These requests either create objects which are registered for later reference in the Connection Object's registry 57 or they call methods on already existing objects.

Since all manipulation of the widget trees 45, 46 is serialized no explicit synchronization is necessary. Because callbacks from the UI Engine 40 to the applications 41, 42 are never waiting for results synchronously, no blocking can occur in the main thread 52. Both design decisions simplify the architecture dramatically and improve its robustness.

The architecture of the application side is similar to the UI Engine side. Every application 41, 42 has a Connection Object 53 which handles asynchronous communication by means of two threads 54, 55 and maintains the proxies in a registry 56 (right hand side of Fig.5).

A similar structure is used in a case where plural user stations have simultaneous sessions with one application. In any case, for each pair of widget structure and proxy structure, there is created a corresponding pair of Connection Objects.

In cases where multiple sessions are running with a single application, or applications using the same database 25 (see Fig. 1), a serialization buffer 48 (as shown in Fig.5 on the left side for the UI Engine 40) is also necessary for the application side. Otherwise, synchronization mechanisms have to be used for protecting data from concurrent accesses.

Besides serving the two threads 51, 58 (outgoing and incoming), a Connection Object 47 also administrates all resources which are associated with the connection, e.g. a list which relates object identifiers with widgets and proxies, respectively (registry). If a connection is closed, all associated resources are released.

### 7) Application Controller

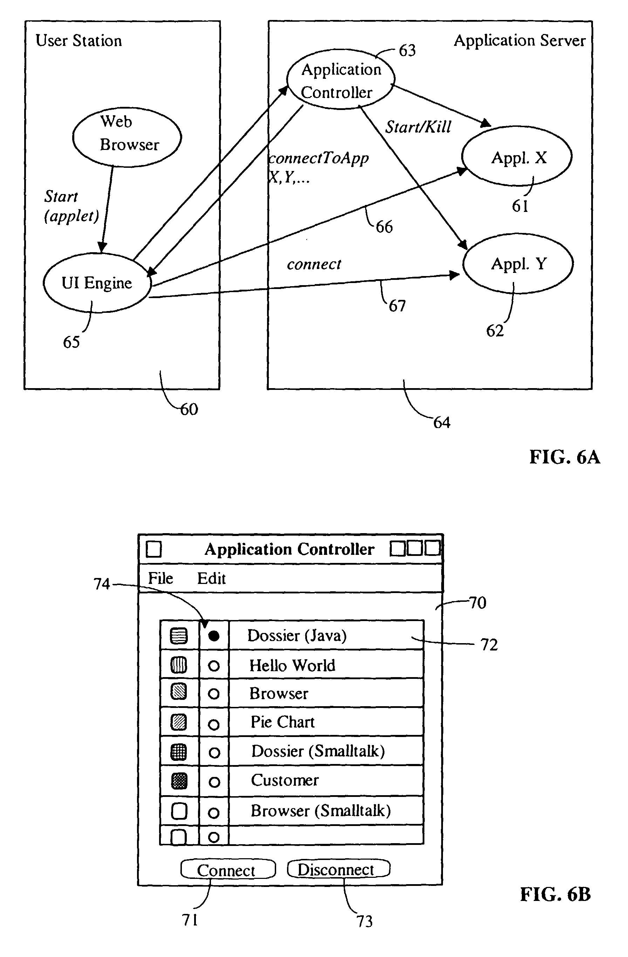

To assist in establishing connections between user stations 60 and applications 61, 62, an Application Controller 63 can be provided in a system using the invention (see Fig.6A). The Application Controller 63 is itself an application program that allows other (normal) applications 61, 62 to be started and stopped on the machine 64 that it is running on. In addition, it can send a command ('connectToApp') to an UI Engine 65 to which it is connected, to request ('connect') a connection 66, 67 to be established to any of these applications 61, 62 running on the server 64. The UI Engine 65 can handle more than one connection 66, 67 at the same time. These connections 66, 67 can be established passively whereby the UI Engine 65 waits in server mode for applications 61, 62 to connect. The reverse might be supported as well, i.e., connections 66, 67 can be established actively by the UI Engine 65. In client mode, the UI Engine 65 calls out to a given URL address. A URL can be specified in a command line argument when the UI Engine 65 is started. However, it is also possible to make the UI Engine 65 connect to an application server 64 by sending it a request (containing the application's URL) programmatically via a particular connection.
The Application Controller 63 presents a number of applications visually in a window 70 (Fig.6B). Double clicking on an application's representation (the Dossier application is started by clicking on the field 72), or selecting the application and clicking the 'Connect' button 71 makes the UI Engine 65 connect to that application's server 64. Connections can be closed again by selecting an application and clicking the 'Disconnect' button 73. When a connection to an applications server 64 can be established the corresponding visual representation might indicate this by turning the red light in the column 74 to green. Connections can also be pending, i.e. started in the UI Engine 65 but not yet established because the server 64 is not responding. Pending connections might be indicated by a yellow light in the column 74. It is obvious that there are many other ways to display or represent the status of an application.

### 8) Examples

In this section, two examples are given, one for the transmission of table data, and the other for generating the widget for a pie chart display.

### a) Table example

In a system using the invention, the proxies (counterpart elements provided on the application server) have as far as possible a similar interface as dialog elements provided with the host programming language (for example, Java or Smalltalk). The various actions which are provided when using the widget/proxy construct may have very different requirements on the communication characteristics of the interface of the proxy. Thus, users would have to adapt strongly to the communication conditions when using the widgets/proxies.

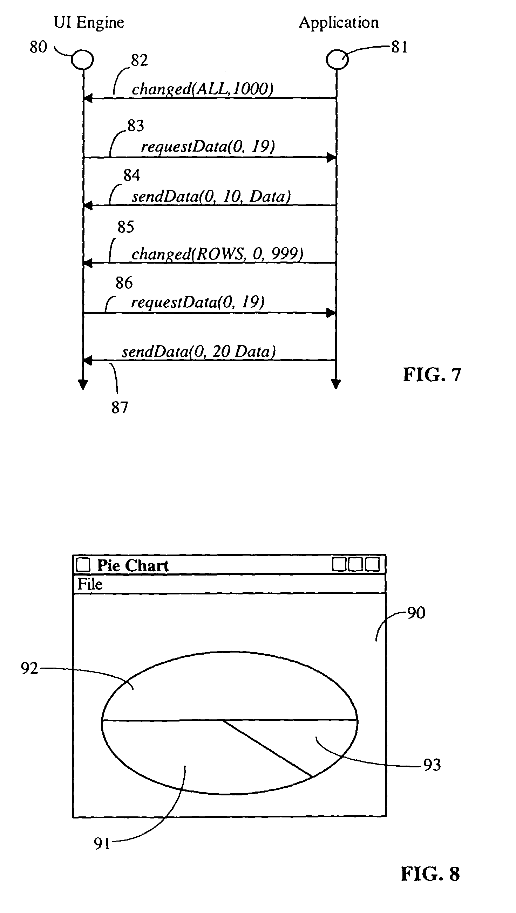

In a system employing present invention, however, the communication protocol is to a great extent decoupled from the interface. In the following this will be shown for the case of a table model (see Fig.7).

The table model in the UI Engine 80 accepts mainly the following commands:
- *changed*: notifies the model in the UI Engine 80 to set invalid the whole shadow table model (or specified portions thereof). If this affects the visual presentation, new data are requested with the command *request data*.
- *sendData*: sends data (a block including a plurality of lines and/or columns) to the shadow table model in the UI Engine 80. This sending can be done either as response to the command *requestData*, or it can be done spontaneously.
The proxy on the application side 81 deals with the following requests:
- *requestData*: requests a data block from the application 81. The calling is asynchronous, i.e., it does not block the UI Engine 80 and thus does not result in the immediate delivery of data. It is expected, however, that the data will be transmitted within a reasonable span of time.
- *setData*: transfers table data that were changed by the user from the UI Engine 80 to the application 81.

In the following a typical example of the exchange of data between the UI Engine 80 and application 81 is addressed in connection with Fig.7. In a first step 82 the application 81 notifies the mode! in the UI Engine 80 about the size of the table. In the present example the UI Engine 80 must display the first 10 lines of the table. Because of communication characteristics 20 lines are requested by the UI Engine 80 (step 83) by issuing the command *requestData(0, 19)*. Now, the application 81 sends the data, but decides to send only the first 10 lines (step 84). The respective command is *sendData(0, 10, Data)*. Prior to sending the remaining 10 lines that were requested by the UI Engine 80, the application 81 invalidates the whole table (step 85). It notifies the model in the UI Engine 80 to set invalid the whole shadow table model by sending the command *changed(ROWS, 0, 999)*. Then, the UI Engine 80 again requests only data for the visible area of the table. Since in the present example the first 20 lines are visible, the UI Engine issues the command *requestData(0, 19)* (step 86). In the last step 87, the application 81 now send the requested data to the UI Engine 80. The respective command is *sendData(0, 20, Data)*.

When implementing the scheme shown in Fig.7, the communication characteristics will be considered. A selection will be made, whether a change of table data on the application side 81 results in sending a *change* request, or whether the changed data will be directly transferred to the UI Engine 80 with the command *send data*. The first solution increases the communication effort but reduces the amount of transmitted data to a minimum. The second solution minimizes the communication effort but may possibly transfer data which are not visible (and may never be required for display).

### b) Pie Chart example

The generation of a widget is described in the following for the example of a pie chart 90 (see Fig.8).
As described earlier, a widget/proxy construct for a dialog element consists of two halves: the presentation element (widget) in the UI Engine, and the counterpart element (proxy) in the application server. In addition to these elements (half-objects) there is the real dialog element 80 which often already exists and need not be adapted for a system using the invention.

The real dialog element and the presentation element (widget) in the UI Engine is implemented in Java. The counterpart element (proxy) in the application server must be implemented for each language supported by the system (e.g. Smalltalk and Java).

### Pie chart implementation details:

A PieChart 90 supports setting the values to be shown, their names, and colors. Clicking on a pie segment 91-93 sends an action with the name of the clicked segment as an argument.

For simplicity PieChart 90 is not implemented as a model-based widget. Implementing a model-based widget would require implementing a corresponding half object which accesses and tracks changes of a model object.

### Implementing the Widget (presentation element)

When the UI Engine needs to instantiate it uses different rules for finding the widget 15 corresponding to a proxy 16. *Note: In this case the association of the two half objects is based on the name of the widget. The convention is to use the UI* Engine prefix for the UI Engine widget (UIPieChart) and a prefix for the proxy half (ULCPieChart). Each UI Engine widget must initialize its state from the proxy. In addition, the PieChart 90 offers the following application programming interface:
1. handle a request to set the data (values, labels, colors),
2. send an event to the proxy 16 when a pie segment is clicked.

UIPieChart descends from com.oti.ulc.UI.Component. UIPieChart adapts PieChart so that it can be used by the UI Engine. To do so, it keeps a reference to the PieChart widget. Here is an excerpt from the class definition of UIPieChart: 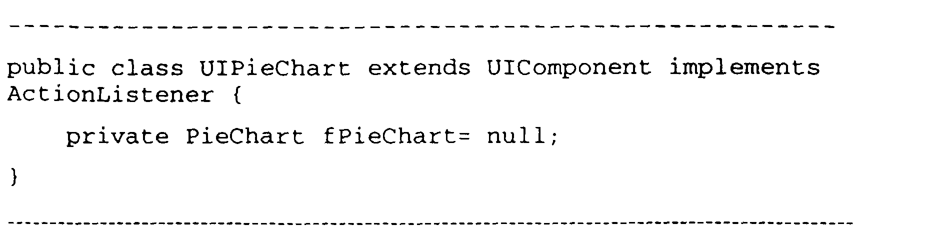 To restore its state from the proxy, UIPieChart overrides restoreState.

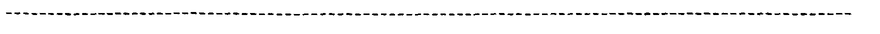

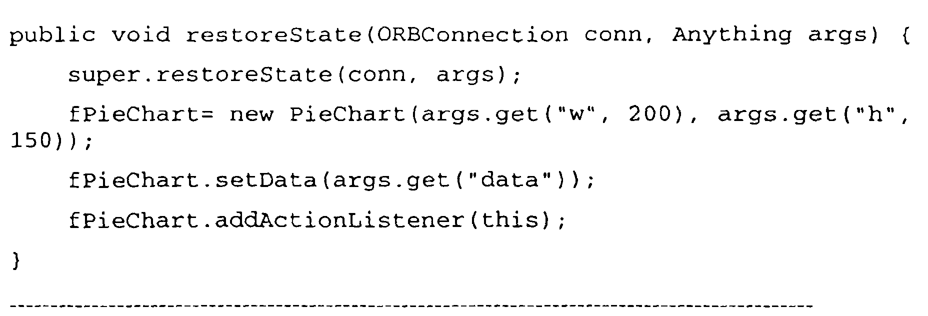

A call to the inherited restoreState method restores the inherited state. The PieChart widget is created and initialized with the restored state. The ORBConnection argument is not used in this example and is just passed on to the base class.

The communication of data between the UI Engine and the proxies is based on data objects called *Anythings*. An Anything is a dynamic data structure which can be transferred between processes. The method restoreState receives an Anything as its argument and uses Anything accessor methods to retrieve the individual arguments. Anything can either contain a simple data type or arrays and dictionaries of Anything. To retrieve the arguments requires that the proxies and the UI Engine widgets agree on how they package their arguments into an Anything. In this case the Anything is a dictionary and restoreState retrieves the arguments by name. For example, args.get ("w") retrieves the width argument of the pie chart. In the same way the method setData restores the pie chart's data from the Anything and passes it on to the PieChart widget.

Since UIPieChart wants to inform the proxy when a pie segment 91-93 is clicked it implements the ActionListener interface. It also registers itself as an action listener of PieChart. Requests sent from the proxy are dispatched to handleRequest. This method receives the name of the request together with its arguments packaged as an Anything. UIPieChart implements only a single request named setData to set the pie chart's data:

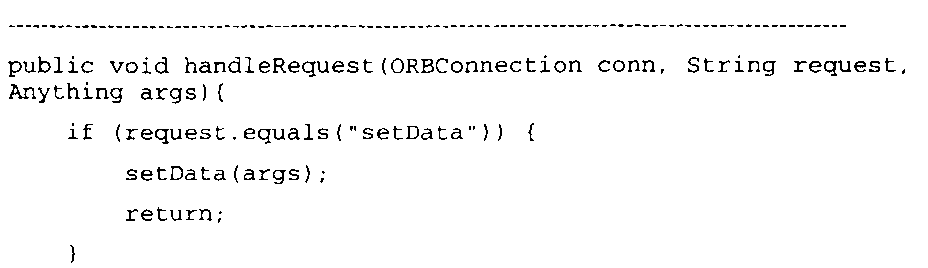

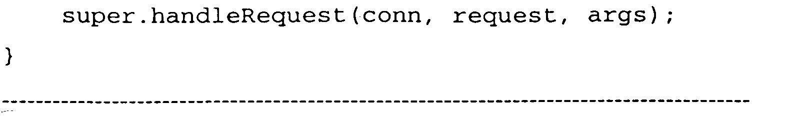

The method handleRequest uses the method setData to extract the data from the Anything and install it into the PieChart. Invoking the inherited handleRequest allows the base classes to handle its requests.

UIPieChart needs to send an event to the proxy when the user clicks a pie segment. To do so it implements the ActionListener method actionPerformed and calls sendEventULC to send the event.

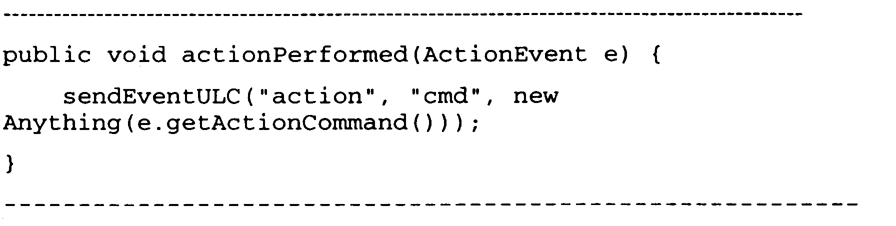

SendEventULC takes the name of the event, its type name, and an argument. The event's argument is wrapped into an Anything. In this case it is a simple string which corresponds to the label of the clicked pie segment.

### Implementing the Proxy (counterpart element)

The above example has shown how to handle requests and send events in the UI Engine half. This section describes how to implement the proxy half of the PieChart 90. Since the present PieChart widget needs to be usable from both Java and Smalltalk there are implementations for both languages.

### Implementing the proxy in Java

The Java half of PieChart is defined in the class ULCPieChart. In contrast to the UIPieChart one can define the ULCPieChart in a package of choice. The present implementation uses the convention of prefixing proxies with ULC. Internally, when the proxy wants to create its UI Engine widget it passes the type name of the widget to be created to the UI Engine. By default the type name corresponds to the class name without the ULC prefix. If desired, this default can be changed by overriding the method typeString defined in ULCProxy.

The proxies have to retain the state of the corresponding UI Engine half. To do so, ULCPieChart stores the values, labels, and colors of the pie chart widget in its instance variables

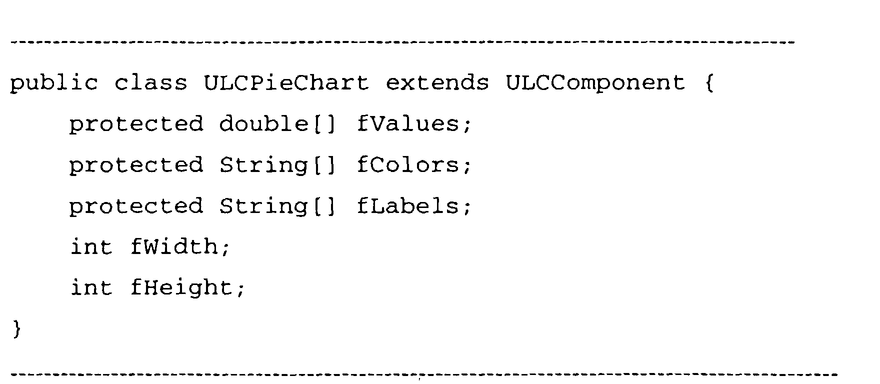

The ULCPieChart needs to tell the UI Engine the location of its proxy class. This is done by implementing the typeString method that returns the fully qualified class path.

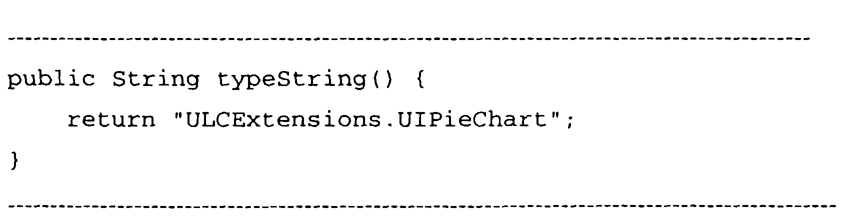

The ULCPieChart has to implement the UI Engine requests symmetrically. First it needs to transfer the widget state to the UI engine. This is done by overriding saveState. SaveState fills the arguments kept in its instance variables into an Anything.

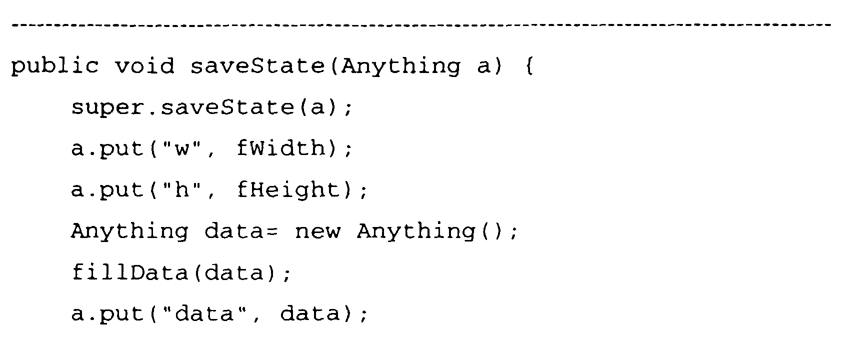

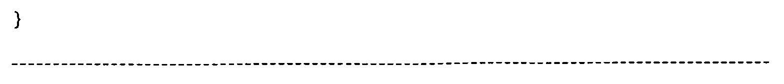

The setData request is implemented in the following ULCPieChart method.

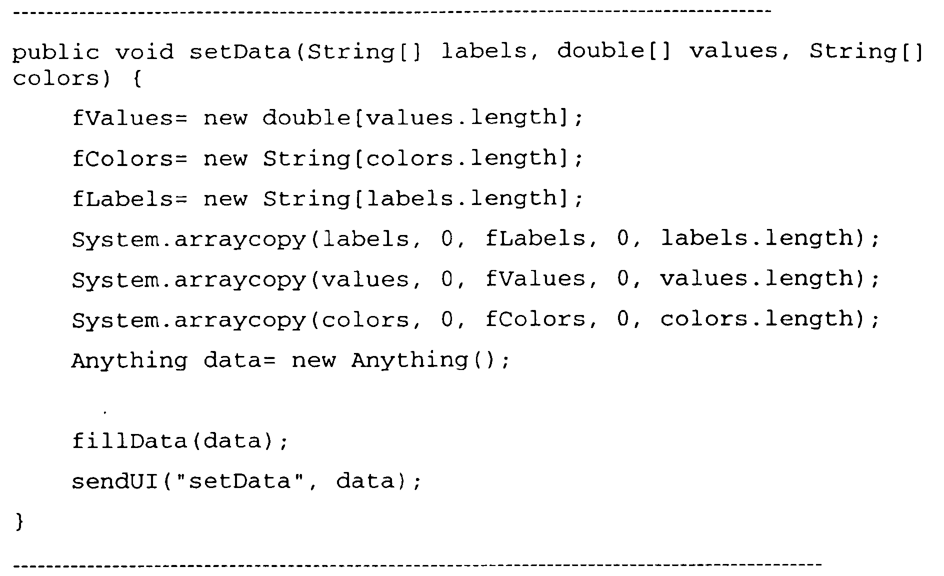

A request method only needs to package its arguments into an Anything. In this case the arrays with the values, labels, and colors are wrapped into the Anything structure which is expected by the UI Engine half. Then, the request is sent to the UI Engine with sendUI, which transmits the request name and the Anything argument to the UI Engine.

The last step is to handle action events from the UI pie chart 90. To handle requests one overrides handleRequest. This method receives the name of the request together with an Anything that stores the request data.

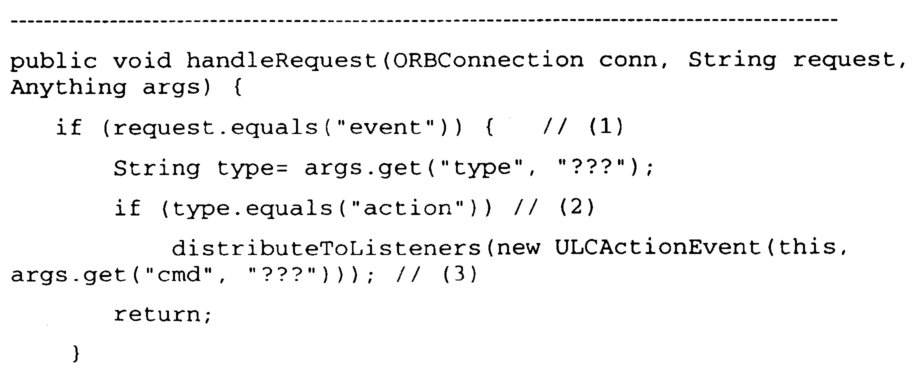

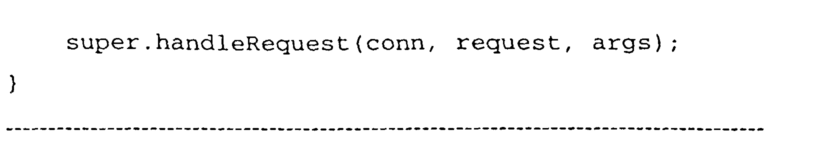

These are steps to be implemented in handleRequest:
1. Test whether the request is an event.
2. Check the type of the event request to find out if it is an action event.
3. If it is an action event create an ULCActionEvent and use the distributeToListeners method to notify the registered listeners.
4. If it is not an action event pass it on to the base class.

### Implementing the proxy in Smalltalk

The Smalltalk implementation of ULCPieChart is conceptually identical to the Java one. The saveState: method packs the widget data into the Smalltalk version of Anything.

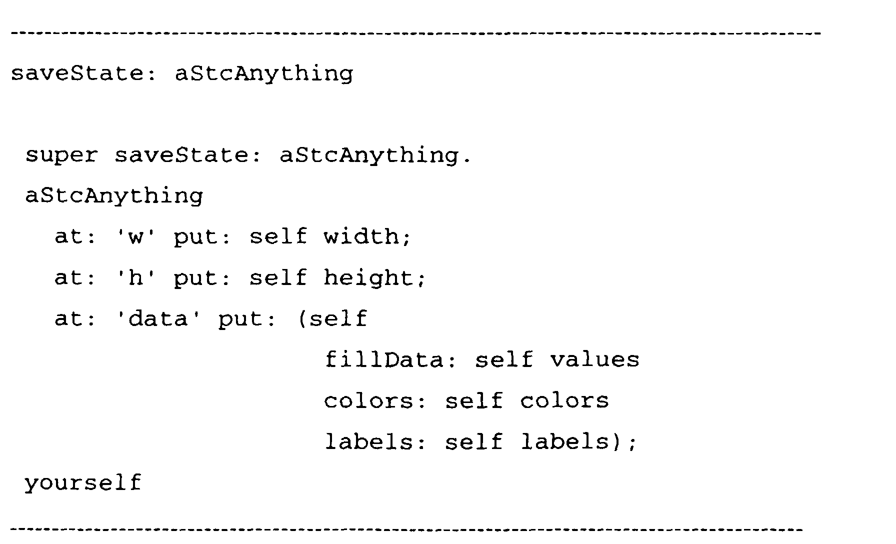

Below is the implementation of the setData request:

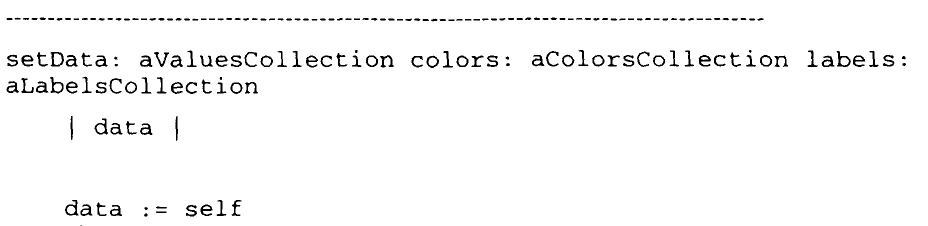

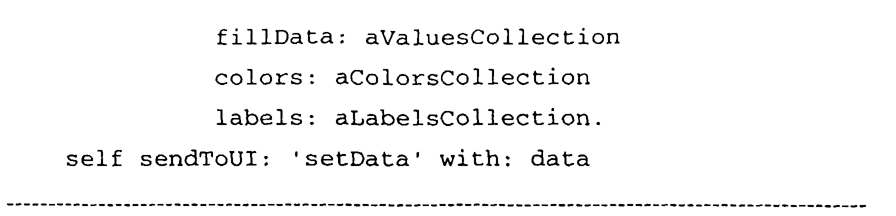

In Smalltalk the type name used to request the creation of UI Engine widgets is defined by overriding the method typestring.

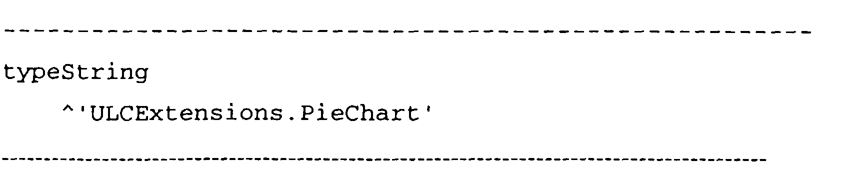

In the case of ULCPieChart you simply return the string 'PieChart'.

## Claims

1. A system for interactive cooperation between an application program (18, 61, 62, 81) in a server (14, 64) and a user station (13, 60) over a link or network (19),
• a presentation layer being provided between the application program (18, 61, 62, 81) and the user station (13, 60); and
• a dialog element (11, 70, 90) being used for presentation of information on said user station (13, 60);
in which system
• said presentation layer is partially implemented in the user station (13, 60) and partially in the server (14, 64), and comprises a pair of presentation elements representing said dialog element (11, 70, 90); one presentation element (15) of said pair being provided in the user station (13, 60), and the corresponding presentation element (16) of the pair being provided with the server (14, 64); and
• a program object (17, 40, 65) is provided in the user station (13, 60) for independently controlling the presentation element (15) in said user station (13, 60).

2. A system comprising a user station (13, 60) and a server (14, 64) with an application program (18, 61, 62, 81), and a link or network (19) between user station (13, 60) and server (14, 64) for data exchange,
a presentation interface being provided for the interactive transfer of dialog data and messages between the user station (13, 60) and the application program (18, 61, 62, 81),
in which system
• the presentation layer is divided between user station (13, 60) and application program (18, 61, 62, 81) and provides, for a dialog element that is used for the presentation and/or input of the dialog data in the user station (13, 60), a pair of interface elements for transferring and holding the dialog data; one of which (15) is located in the user station (13, 60), and the other of which (16) is located in the server (14, 64);
and wherein
• a program object (17, 40, 65) is provided in the user station (13, 60) for controlling the interface element (15) being located in the user station (13, 60); and
• a mechanism is provided for independently exchanging the dialog data between corresponding interface elements of the pair of interface elements in the user station (13, 60) and in the server (14, 64), respectively.

3. A method for interactive cooperation of an application program (18, 61, 62, 81) and a remote user station (13, 60) over a link or network (19); a dialog element for input and/or output of dialog data on said user station (13, 60); the method comprising the following steps:
• establishing, in the user station (13, 60), a structure of a presentation element (15) for transferring and holding the dialog data and a managing mechanism for implementing and controlling said presentation element (15);
• establishing, with the application program (18, 61, 62, 81), a corresponding structure of a counterpart element (16) for transferring and holding the dialog data; and
• keeping, for the interactive exchange of the dialog data, two corresponding sets of data for the dialog element in an associated presentation element (15) and in the corresponding counterpart element (16), respectively;
so that the user station (13, 60) and the application program (18, 61, 62, 81) each can cooperate with the presentation element (15) and counterpart element (16), respectively, independent of transmissions over the link or network (19).

4. A system in accordance with claim 1 or claim 2, in which
• for the interface element (15) in the user station and for the interface element (16) provided with the application program, a data structure model is provided, corresponding models on both sides being symmetrical, so that the same data can be scored in respective locations of both models.

5. A system in accordance with claim 4, in which
• the models are provided separate from the associated interface element in the user station (15) and the interface element (16) with the server, respectively, so that data can be directly transferred between corresponding models on both sides.

6. A system in accordance with claim 4, in which
• for a plurality of presentation elements (16) provided with the server, which require different data sets from the same data structure, a common model is provided.

7. A system in accordance with claim 1 or claim 2, in which
• said interface element (16) provided with the server (14, 64) and said interface element (15) provided in the user station (13, 60) are organized in a tree structure according to an application for which they are used; the structure in the user station (13, 60) being implemented by the program object (17, 40, 65) being provided in the user station (13, 60) according to instructions from the application program (18, 61, 62, 81).

8. A system in accordance with claim 1 or claim 2, in which
• for each structure of presentation elements (15) in the user station (13, 60), and for each structure of interface elements (16) provided with the server (14, 64), a communication mechanism is provided, each communication mechanism being connected to the link or network (19) for bi-directional data transfers, and having separate input and output paths with buffering capability (48, 50) for the transfer of data or requests to and from the associated structure of interface elements.

9. A system in accordance with claim 8, in which
• the transmission characteristics of the communication mechanisms can be selectively modified, to adapt to current transmission characteristics of the link or network (19).

10. A system in accordance with claim 1 or claim 2, in which the presentation of information on said user station (13, 60) is the input and/or output of dialog data and/or messages.

11. A system in accordance with claim 1 or claim 2, in which the pair of presentation elements is used for the exchange of data, preferably dialog data.

12. A system in accordance with claim 1 or claim 2, in which the interface element (15) of said pair being provided in the user station (13, 60) is a widget or presentation element and wherein the corresponding presentation element (16) of the pair being provided with the server (14, 64) is a proxy or counterpart element.

13. A system in accordance with claim 1 or claim 2, in which the program object (17, 40, 65) is a user interface engine.

14. A method in accordance with claim 3, in which
• from a set of data loaded in the counterpart element (16) with the application program (18, 61, 62, 81) for an interactive session, only those data are transferred to the presentation element (15) in the user station (13, 60) which are actually required by the user station (13, 60).

15. A method in accordance with claim 3, in which
• for the asynchronous transfer of the dialog data from an application to the user station (13, 60), the presentation element concerned is filled in the user station (13, 60) with place holder items to indicate a loading process, and that the place holder items are replaced by actual data items when they are received over the link or network (19) from the respective counterpart element (16).

16. A method in accordance with claim 3, including the step of
• restarting an interactive session after an interruption, by reloading required data in the presentation element (15) of the user station (13, 60), with data contained in the counterpart element (16) provided with the server (14, 64).

17. A method in accordance with claim 3, comprising the step of
• enabling or disabling the presentation element (15) in the user station (13, 60) in dependence of the status of at least one other local presentation element, thus avoiding the transfer of enabling or disabling information from the application program (18, 61, 62, 81) over the link or network (19).

18. A method in accordance with claim 3, comprising the step of
• organizing the presentation element (15) and counterpart element (16) in a tree structure, and
• initializing the tree structure in the user station (13, 60) under control of the application program (18, 61, 62, 81) at the beginning of an interactive session.

19. A method in accordance with claim 18, comprising the step of
• modifying the tree structure of the presentation element (15) in the user station (13, 60) under control of the application program (18, 61, 62, 81) during an interactive session, for adapting to the current situation.

20. In an interactive system a method for presentation of data on a user station (13, 60) which is connected via a network or link (19) to a facility (14, 64) hosting an application program (18, 61, 62, 81), the method comprising the following steps:
• establishing, in the user station (13, 60), a presentation element (15) for receiving and holding the data from the application program (18, 61, 62, 81); and
• establishing, in the user station (13, 60), a managing mechanism for controlling said presentation element (15); and
• establishing, in said facility (14, 64), a corresponding structure of a counterpart element (16) for transferring and holding the data; and
• keeping, for the interactive exchange of the data between said facility (14, 64) and said user station (13, 60), two corresponding sets of data in said presentation element (15) and in said corresponding counterpart element (16), respectively;
so that the user station (13, 60) can use the data kept in said presentation element (15) for presentation to a user.

21. A method in accordance with claim 20, wherein said interactive system is an insurance, banking, manufacturing, hotel, or call center application.

22. A method in accordance with claim 21, wherein said facility (14, 64) is connected to a data base or business service which provides data to said application program (18, 61, 62, 81), and wherein said data are insurance, banking, manufacturing, hotel, or call center specific data.

23. A method in accordance with claim 20, comprising the step of
• inputting new data into said user station (13, 60); and
• transfering said new data from said presentation element (15) via said link or network (19) and said corresponding counterpart element (16) to said application program (18, 61, 62, 81).

24. A method in accordance with claim 23, comprising the step of
• validating said new data locally within said user station (13, 60) before transfering said new data from said presentation element (15) via said link or network (19) and said corresponding counterpart element (16) to said application program (18, 61, 62, 81).
